Europäisches Patentamt

European Patent Office

Office européen des brevets

(11) Publication number: **0 349 646**
**A1**

## EUROPEAN PATENT APPLICATION
### published in accordance with Art. 158(3) EPC

(21) Application number: 88906903.5

(51) Int. Cl.⁴: **B62J 15/00** , **B62J 1/28**

(22) Date of filing: 05.08.88

(86) International application number:
PCT/JP88/00778

(87) International publication number:
WO 89/00943 (09.02.89 89/04)

(30) Priority: 06.08.87 US 82175
04.01.88 US 140555

(43) Date of publication of application:
10.01.90 Bulletin 90/02

(84) Designated Contracting States:
DE FR GB IT

(71) Applicant: OSTROWIECKI, Morris
5-21-11 Jingumae, Shibuyaku
Tokyo 154(JP)

(72) Inventor: OSTROWIECKI, Morris
5-21-11 Jingumae, Shibuyaku
Tokyo 154(JP)

(74) Representative: Patentanwälte TER MEER -
MÜLLER - STEINMEISTER
Mauerkircherstrasse 45
D-8000 München 80(DE)

(54) RETRACTABLE FENDER.

(57) This invention relates to a retractable fender
which is fitted slidably below the saddle of a bicycle
and, when it rains, can be pulled out backward so as
to prevent the splash of water by a rear tire from
contaminating the back of a rider.

FIG. 12

## Retractable Fender

PROBLEMS IN THE PRIOR ART • BACKGROUND OF THE INVENTION

Bicycle fenders are effective on the limited occasion, and are only really necessary on rainy days. In more particular, on other days, they are not necessary and become an obstacle to the contrary. Thus, the present invention is directed to a retractable fender which can be drawn out only when the rider needs to use it. The present invention is to enable the fender to manufacture with less weight and more economically, and further to provide more simplified structure of a bicycle.

DESCRIPTION OF STRUCTURE AND FUNCTION

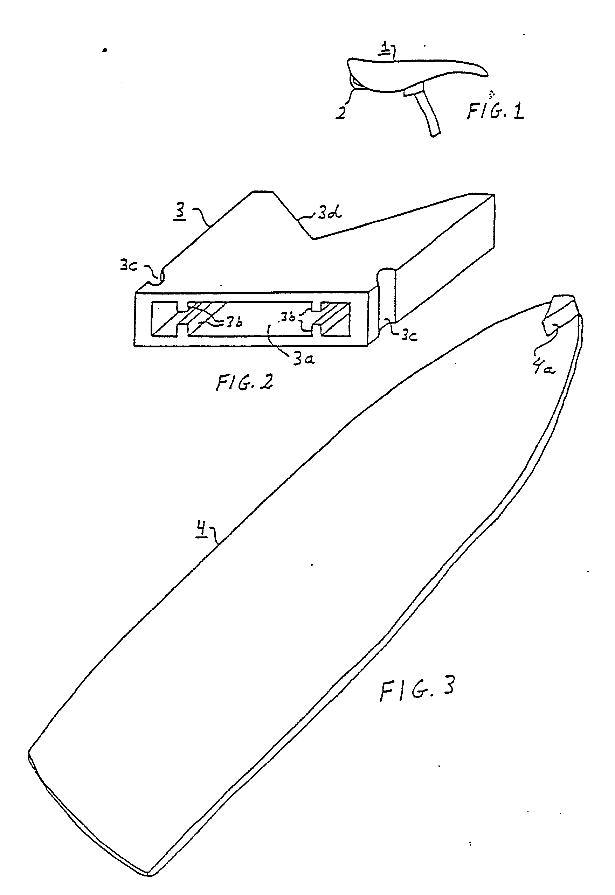

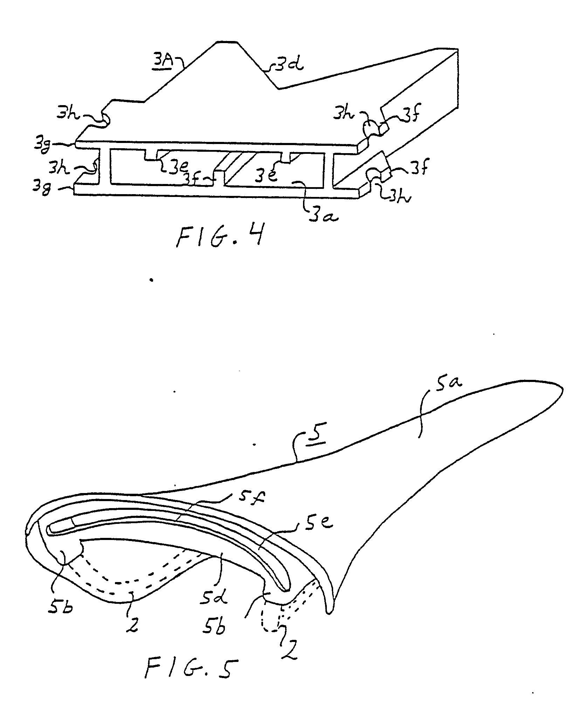

With reference to Fig. 1, numeral 1 designates a conventional bicycle saddle and numeral 2 a pair of rods utilized for mounting the saddle to a bicycle frame. With reference to Fig. 2, numeral 3 designates a support for slidably supporting a fender 4 beneath the saddle.

The support 3 is formed at the inside thereof with a slot 3a which has an inner surface having formed thereon two pairs or ridges 3b.

The support 3 is placed between the rods 2 with the V-shaped end facing toward the front of the saddle. When the grooves 3c fit against the rods 2, the support 3 is then released to recover its original shape, whereby the support 3 is fixedly supported under the saddle by the rods 2. Next, the fender 4 is fitted into the support 3 by slightly pulling on the upper and lower surfaces of the support 3 so as to insert the V-shaped projection 4a of the fender through the slot. After the fender 4 is inserted, the support 3 is released again, whereby the fender 4 is locked inside the support 3. The support 3 is firmly locked between the saddle fixing rods 2 due to the combined rigidity of the support 3 and the fender 4.

Since the fender 4 has substantially the same shape as the bottom of the saddle 1, the fender assembly or unit (fender 4 and support 3) can fit well between the saddle fixing rods 2. On rainy days, when the fender is pulled out, the water splashed upwardly by the rear tire hits the fender to prevent the splashed water from hitting the back of the rider. During non-rainy days, the fender may be retracted under the saddle 1. When the fender 4 comes out, it smoothly slides by the action of the guides 3b. However, since the guides 3b provide a clearance between the support 3 and the fender 4, the clearance thus formed operates also as passageways of the dirt. If the fender 4 has a somewhat round shape along the cross section thereof, the ridges need not be included, but a small pocket is formed between the fender and the support to prevent the dirt to fit in. Alternatively, the support 3 may have formed therewith a guide extending downwardly along the center of the slot 3a so that the similar effect can be obtained.

It should be noted that any number of modifications may be made without departing from the spirit of the invention. One such modification may include another fender section slidably supported in the fender portion 4, so that the additional fender may be further extended. Furthermore, the support 3 may be attached to the saddle with adhesive. Other than the foregoing, the saddle 1 may be formed with the slot so that the fender 4 may be received therein. Thus, the need of the support 3 can be eliminated.

Fig. 4 shows another embodiment of the support structure according to the present invention. Indicated at 3A is a fender support body. The fender support 3A comprises lips 3f and 3g, each of the lips having a groove 3h formed along thereof so as to receive the rods 2 therein for fixing the saddle 1 to the bicycle frame.

To mount this support under the bicycle saddle, first the fender 4 is inserted in teh slot, then each of the lips 3f and 3g are bent upward and downward, i.e. in the direction away from each other, respectively, then the support 3A is placed under the saddle 1, and then the lips are released, so that the rods 2 fit in the lip grooves to fixedly support the support 3A. With this type of the support, there are provided a pair of ridges 3e along an upper portion of the slot 3a and a central ridge 3f along a lower portion thereof. If the heights of these ridges are properly chosen, the fender can be formed in an expanded and round shape along the surfaces thereof to provide a greater protection from splashed water.

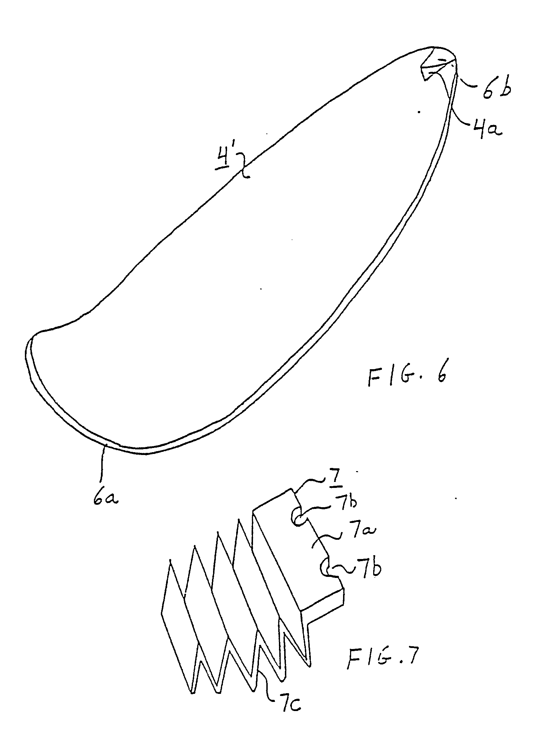

Fig. 5 shows a conventional bicycle saddle 5 which is made using conventional injection moulding techniques. This saddle comprises a top surface 5a, two rod attaching means 5b for the attachment of the saddle, each of the rod attaching means having a hold for receiving the rod therein, and a connecting member 5d for providing extra strength to the under portion of the saddle. The member 5d is also to provide a structure for strengthening the saddle.

The saddle strengthening member 5d is formed with a slot 5e for receiving the retractable fender therein according to the present invention. The slot 5e can be formed during the manufacture of the saddle (during the injection moulding step of the saddle). Accordingly, with this structure formed the slot therein, the fender support 3 or the fender support 3A is no longer necessary. Further, the fender 4 can be formed wider than the case the support is utilized, thereby providing improved characteristics of the fender.

Although the thickness of the strengthening member 5d is shown as 5f in the drawing, it may be made much thicker to extend further outwardly from the saddle. Further, the V shaped stopper structure may be provided for the strengthening member. In this case, the fender 4 would be inserted into the slot with the V shaped stopper facing downward.

Fig. 6 shows another embodiment of the fender. This type of fender has the back portion thereof curved upwardly so as to provide better water splashing prevention characteristics. Also, the stopper 4a is formed to have a linearly decreasing thickness toward the front of the fender, the thickest portion thereof having a thickness greater than the width of the slot 5e. Therefore, once the fender is forced into the slot 5e, it is not possible to pull out. This also becomes difficult for someone to steal the fender.

Fig. 7 shows another embodiment of the retractable fender according to the present invention. This fender is made of plastic material. The numeral 7b indicates grooves for mounting the fender to the pair of rods for attaching the saddle to the bicycle frame and provided along its back side with an accordion pleats type fender. This type of fender is similar to the accordion portion of a drinking straw and can be bent. This fender remains stable even in an extended state or in a collapsed state. This accordion type fender may be formed in a semi-circular shape.

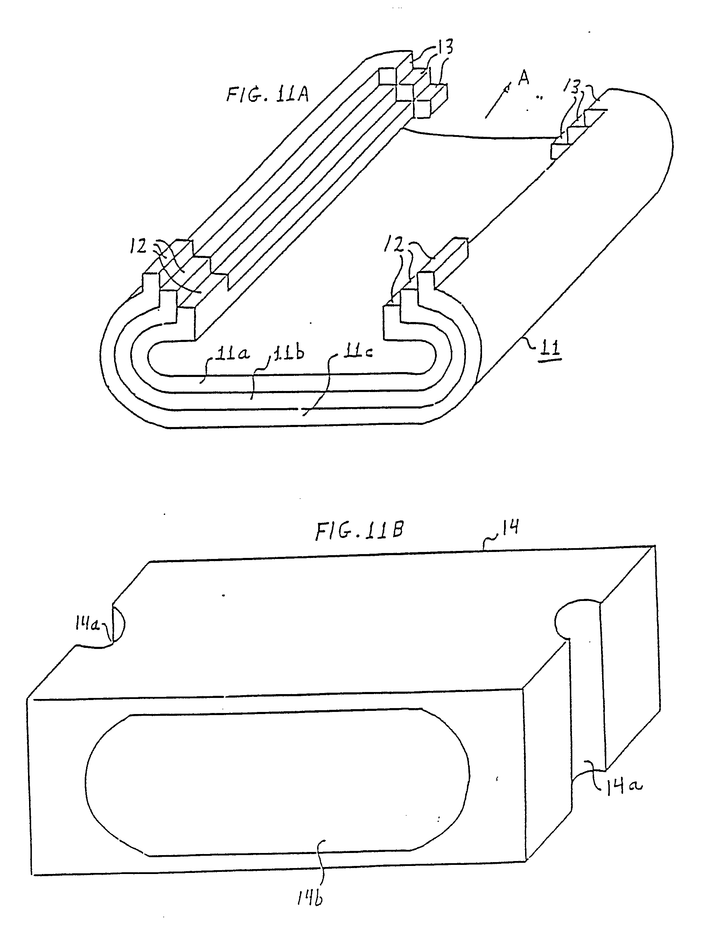

Fig. 11A shows a multiple layer retractable fender and Fig. 11B shows a support therefor according to the present invention. Referring to the Figs.11A and 11B, the numerals 11a, 11b and 11c designate fender sections having semi-elliptical sleeves, each having horizontally protruding stoppers 13 formed at one end thereof and vertically protruding stoppers 12 at the other end thereof. The sleeve 11a fits within the sleeve 11b, and the sleeve 11b fits within the sleeve 11c. When these sleeves or fenders are pulled out in the direction indicated by the arrow A, the fenders slide out of each other until the respective vertical portions 12 come into contact with the horizontal portion 13 of the adjacent outer fender. Thus, the fenders extend out.

The support portion 14 shown in Fig. 11B comprises a rectangular frame having the grooves 14a formed along the sides thereof. The grooves 14a are to fit therearound the bars which are mounted under the saddle of a conventional bicycle. The support portion 14 is formed with a hole 14b for receiving therein the sleeves 11a, 11b and 11c. The width of the hole 14b is substantially the same as the outer diameter of the fender section 11c. Accordingly, when the fenders are pulled out of the support, the vertical protrusion 12 of the fender body 11c comes into engagement with the support body 14 to prevent it from coming out therefrom.

It should be noted that by using a flexible material such as plastic for the fender section and by choosing the appropriate dimension therefor, all the fender sections can be formed to have the same dimensions, whereby only one cast would need to be made thereby reducing the manufacturing costs.

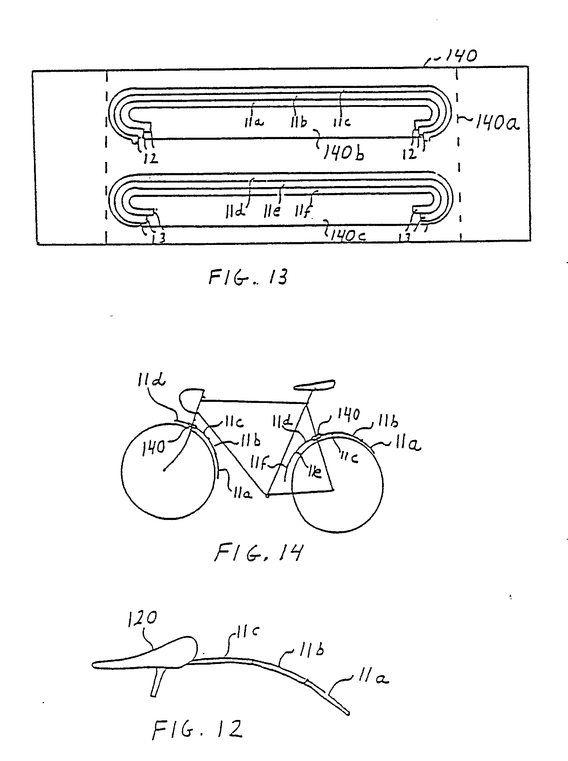

Fig. 12 shows a view of the multiple layer fender with the sleeves being in the extended position. The fenders are extensible in the order of 11a, 11b and 11c, as shown in the drawing. However, the support portion fitted under the saddle 120 is not shown. Further, when these fenders are pushed into the support portion, they are not visible from outside. Although the fenders shown in Fig. 11A are illustrated as being straight along the length thereof, they may curved as shown in Fig. 12.

It should be also noted that the multiple layer retractable fender unit can also be mounted on the front fork or the rear fork as shown in Fig. 14. In this case, the outer dimension of the fender support portion should be made slightly smaller so as to enter between the respective forks (each having two forks). It is also possible for the fender unit to pull out of the support both in the backward and forward directions of the bicycle. In particular, the fender 11d may be provided for the front tire, and the fenders 11d, 11e and 11f for the rear tires.

Fig. 13 shows another embodiment of a fender support according to this invention wherein the multiple fenders (overlapping type fender) extensible in both directions are housed in the support. In this drawing, the hole 140b is used for receiving the fenders 11a, 11b and 11c, and the hole 140c is for the fenders 11d, 11e and 11f. The fenders 11a-11c are extensible in one direction out of the support 140 and the fenders 11d-11f are extensible in the other. The support 140 can be formed to have substantially the same length as each of the fenders so as to fully encase each fender section.

The fender section and the support may be formed of plastic, nylon, or any other flexible material.

It should be noted that other structure may be realized without departing from the sprit of the invention. One such modification may include the combined multilayer fender having the structure of portable radio antennas.

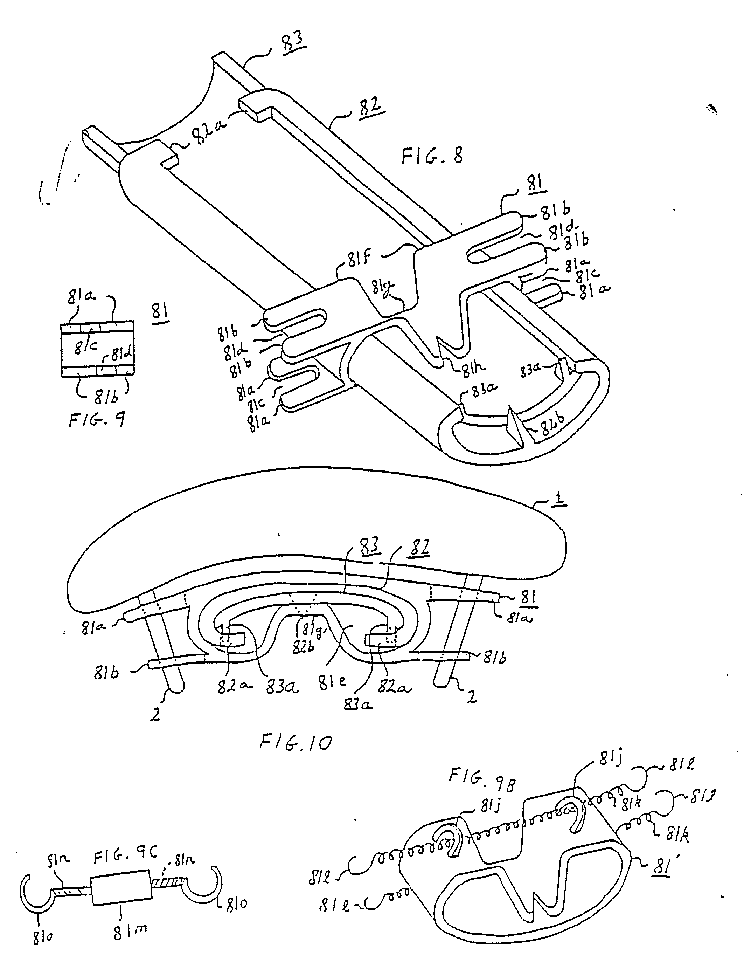

Fig. 8 shows another embodiment of the fender assembly according to this invention. Fig. 9 shows a side view of the support portion 81 shown in the Fig. 8, and Fig. 10 shows a fender support unit mounted under a seat. Referring to Figs. 8-10, numeral 81 generally designates a support, numeral 82 generally designates a first fender section slidably supported in the support 81, and numeral 83 generally designates a second fender section slidably sup ported in the first fender section 82. The second fender section 83 is first pulled out. The second fender section 83 is firstly pulled out and the protruding stopper 83a attached thereto comes into contact with the horizontal protrusion 82a of the first fender section 82 whereby the first fender 82b is subsequently pulled out. The entire of the fender is extensible until the vertically protruding stopper 82b attached to the end of the first fender 82 comes against the groove 81h formed in the support portion 81. The support 81 has a central portion 81g curved inwardly and a bottom portion to be contacted with the inner surface of the second fender section 83, thus providing a smooth sliding movement of the fender assembly without unstable movement. The support 81 is further formed at the upper and lower portions thereof with finger-like stays 81a and 81b which respectively define slots 81c and 81d therebetween for receiving the rod 2 therein so that the saddle can be attached to the bicycle frame. These fender assemblies (the support portion 81, the first fender section 82 and the second fender section 83) are formed preferably of a flexible resilient material such as plastic or nylon.

To assemble the fender, firstly, the fender portion 83 is fitted into the fender portion 82, with the vertical stoppers 83b oriented toward the horizontal stoppers 82b. Since the fender portions 82 and 83 are flexible, the vertical stoppers 83a of the fender 83 and the horizontal stoppers 82a of the fender 82 are deformed as they pass thereunder. Once the teeth 83a pass completely, the fender portion 83 is engageable with the fender portion 82 by the teeth 83a and the stopper portions 82a, and no longer comes out of the fender 82.

Next, the assembly of fenders 82 and 83 are inserted into the support 81. At this time, the stopper 82b and the portion 81g of the support 81, each formed of flexible material, are deformed to each other with their resilient force. Finally, to mount the fender support unit on the saddle rods 2, the fingers 81a, 81b are bent up and down respectively so that the rods 2 can fit therebetween and then, once in position, these fingers 81a and 81b are released so that the rods 2 fit into the respective slots 81c and 81d to fixedly support the support 81.

To extend the fender portion 82, 83, the user pulls the fender portion 83 backwardly, whereby the portion 83 slides backward until the vertical stoppers 83a come against the horizontal stoppers 82a of the fender 82, whereby the fender portion 82 is pulled backwardly until the vertical stopper 82b of the fender 82 locks in the V shaped groove 81h formed at the portion 81g of the support 81. the groove 81h is formed so deep that it serves to provide·stable extension of the fender. When the fender is retracted, the user is only required to push the fender 83 forwardly. The vertical stopper 82b of the fender 82 hits against the end of the fender 83, thus causing both fender portions to slide under the saddle 1.

Fig. 9 is a side view showing the support 81. With reference to Fig. 9, the extending angle of the fender can be adjusted by the location of the slots 81c, 81d when fitting he saddle rods 2 therein. In particular, the fingers may be formed in such a manner that the slots 81c, 81d are staggered with respect to each other so as to regulate the up/down angles at which the fender extends backwardly out of the saddle. Since the fingers 81a, 81b can be as long as desired, regardless of the distance between the rods, there is no need to make them so as to conform to the distance between the saddle rods 2, and accordingly, no adjusting devices or additional mounting parts are necessary. Further, the fender can be mounted not only to the saddle rods but also to the front fork and rear fork.

It should be noted that the fingers 81a, 81b may be slightly tilted so that they can be attached to the saddle rods 2 more fixedly. Further, the fender section 83 may have an upwardly formed tail portion to provide a greater protection from splashed water.

Fig. 9B shows an another embodiment of the support according to the present invention. In this embodiment, there are not provided the arm sections 81a and 81b for the attachment to the saddle rods, and instead thereof are provided a half-circular or U shaped attachments 81j passing therethrough the coil spring 81k which has the respective end attached thereto the hooks 811 for the engagement with the saddle rods. Since the spring 81k is extensible, this type of the support can be mounted on any size of the saddle.

Fig. 9C is another embodiment of the means for attaching the support to the saddle. Indicated at 81m shows an elongated nut which has a length corresponding to the distance between both attachments 81j and 81j of the support 81'. The hook having a straight portion 81n and a bent portion 81o is threadably inserted into the nut 81m. The nut 81m is formed on the opposed end thereof with the inner threads having the opposite threading directions to each other.

For assembling, the nut 81m is placed between the ring portions 81j and 81j provided on the support 81' and then each of the hook arms 81n are passed through the ring portion 81j and threaded into the nut 81m. Next, the hook portion 81o is fitted in the saddle rod 2, and then the nut 81m is turned in the one way direction, so that the support unit 81′ can be locked between both the saddle rods.

BRIEF EXPLANATION OF THE DRAWINGS

Fig. 1 shows a side view of a conventional bicycle saddle;

Fig. 2 shows a perspective view of a fender support according to one embodiment of the present invention;

Fig. 3 shows a perspective view of a retractable fender according to one embodiment of the present invention;

Fig. 4 shows a perspective view of the fender support according to one embodiment of the present invention;

Fig. 5 shows a perspective view of the fender support according to another embodiment of the present invention;

Fig. 6 shows a perspective view of the retractable fender according to another embodiment of the present invention;

Fig. 7 shows a perspective view of the retractable fender according to one embodiment of the present invention;

fig. 8 shows a perspective view of the retractable fender support unit according to one embodiment of the present invention;

Fig. 9 shows a side view of the support portion 81 shown in Fig. 8;

Fig. 9B shows a perspective view of the fender support portion according to one embodiment of the present invention;

Fig. 9C shows a perspective view of an attachment for the fender support portion;

Fig. 10 is a view seen from the rear portion and showing the state of the retractable fender support unit attached to the saddle;

Fig. 11A shows a perspective view of the retractable fender according to one embodiment of the present invention;

Fig. 11B shows a perspective view of the fender support according to one embodiment of the present invention;

Fig. 12 is a view showing the state wherein the fender is extended;

Fig. 13 shows an outside view of the fender support unit according to another embodiment of the present invention; and

Fig. 14 shows a perspective view of a bicycle having fenders of the present invention mounted thereof.

1: Saddle,

2: Rod for attaching the saddle to the bicycle frame,

3: Support portion for supporting the fender,

4: Retractable fender,

5: Saddle,

6: Stopper,

7: Fender fixing attachment,

81: Fender support,

82: Retractable fender,

83: Retractable fender,

11: Multilayer retractable fender,

12: Stopper,

13: Stopper,

14: Support portion for supporting the fender,

140: Support portion for supporting the fender

Claims

(1) A retractable fender assembly which comprises a fender and means for slidably supporting the fender under a bicycle saddle, the fender being adapted to be pulled backwardly out of the saddle for preventing from splashing from the rear tire onto the back of a rider.

(2) The retractable fender assembly as defined in claim 1 wherein the supporting means is adapted to be mounted under the rear part of the saddle and has a slot for slidably receiving the fender therein.

(3) The retractable fender assembly as defined in claim 1 wherein the supporting means includes two vertical grooves formed along the outer sides thereof for fitting against support rods provided along the bottom of the saddle, and a slot formed through the center thereof for slidably receiving the fender therein.

(4) The retractable fender assembly as defined in claim 1 wherein the fender has substantially the same shape as the bottom of the saddle.

(5) The retractable fender assembly as defined in claim 1 wherein the fender has a stopper formed at one end thereof.

(6) A retractable fender which comprises a body portion having two grooves formed along the front thereof for mounting the fender onto bicycle saddle rods, and an flexible accordion portion formed of flexible material and extensibly extending and retracting from the saddle.

(7) A retractable fender assembly which comprises multi-layered fenders and a support section having a slot for fitting the fenders therein, the fenders being extensible and retractable from the support portion and receivable in layers inside the support support portion.

(8) The retractable fender assembly as defined in claim 7 wherein the fenders are extensible from he support portion in one direction.

(9) The retractable fender assembly as defined in claim 7 wherein the fenders are extensible from the support portion in two directions.

(10) The retractable fender assembly as defined in claim 7 wherein the support portion comprises upper and lower slots for supporting the fenders therein.

(11) The retractable fender assembly as defined in claim 7 wherein the support section includes four upper and four lower horizontally extending finger portions, whereby the space between the finger portions can be utilized for mounting the support portion onto the rods below a bicycle saddle or onto a front fork or back fork of a bicycle.

(12) The retractable fender assembly as defined in claim 7 wherein multi-layered fenders comprise an outer fender portion (82) supported in the support portion and an inner fender portion (83) supported in the outer fender portion.

(13) The retractable fender assembly as defined in claim 12 wherein the outer fender portion includes horizontal stopper portion 82a formed at one end thereof and vertical stopper portion 82b at the other end.

(14) The retractable fender assembly as defined in claim 13 wherein the inner fender portion includes a vertical stopper portion 83a adapted to be locked against the horizontal stopper portions of the outer fender to prevent the inner fender from coming out of the outer fender portion and further adapted to pull out the outer fender by engagement with the horizontal stopper portions.

(15) The retractable fender assembly as defined in claim 7 wherein the support section includes a V shaped guide groove formed in conformity to the shape of the vertical stopper portion at one end of the outer fender and for fitting the vertical stopper portion therein.

FIG. 1

FIG. 2

FIG. 3

3A 3d

3h 3h 3f

3g 3e

3h 3f 3f

3g 3e 3f

3a 3h

FIG. 4

5a

5

5f

5e

5b

2 5d

5b

2

FIG. 5

6b

4a

4'

FIG. 6

6a

7
7b
7a
7b

7c

FIG. 7

FIG. 8

FIG. 9

FIG. 10

FIG. 9B

FIG. 9C

FIG. 11A

13

A

13

12

12

11a    11b    11c

11

FIG. 11B

14

14a

14a

14b

FIG. 13

FIG. 14

FIG. 12

# INTERNATIONAL SEARCH REPORT

International Application No PCT/JP 88/00778

**I. CLASSIFICATION OF SUBJECT MATTER** (if several classification symbols apply, indicate all) 6

According to International Patent Classification (IPC) or to both National Classification and IPC

Int. Cl$^4$  B62J15/00, 1/28

**II. FIELDS SEARCHED**

Minimum Documentation Searched 7

| Classification System | Classification Symbols |
|---|---|
| IPC | B62J15/00, 1/00-1/28 |

Documentation Searched other than Minimum Documentation
to the Extent that such Documents are Included in the Fields Searched 8

| | |
|---|---|
| Jitsuyo Shinan Koho | 1914 – 1987 |
| Kokai Jitsuyo Shinan Koho | 1971 – 1987 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, Y1, 47-2177 (Takahashi Saddle Seisakusho Kabushiki Kaisha) 25 January 1972 (25. 01. 72) (Family : none) Page 1, column 2, lines18 to 23 and Drawings, Figs. 1 to 2 | 1-5 |
| Y | JP, U, 52-79662 (Kawasaki Heavy Industries, Ltd.) 14 June 1977 (14. 06. 77) (Family : none) | 1-5 |
| A | JP, U, 55-87883 (Yamaha Motor Co., Ltd.) 17 June 1980 (17. 06. 80) (Family : none) | 1-15 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 6, 1988 (06. 10. 88) | October 24, 1988 (24. 10. 88) |
| International Searching Authority | Signature of Authorized Officer |
| Japanese Patent Office | |

Form PCT/ISA/210 (second sheet) (January 1985)